# EUROPEAN PATENT SPECIFICATION

(11) **EP 1 634 106 B1**
(45) Date of publication and mention of the grant of the patent: **14.04.2010**
(21) Application number: 04739980.3
(22) Date of filing: 17.06.2004
(51) Int. Cl.: G02B 5/128

(54) **PARTIALLY RETROREFLECTIVE ARTICLES AND ASSOCIATED PRODUCTION METHODS**
TEILWEISE RETROREFLEKTIVE ARTIKEL UND ASSOZIIERTE HERSTELLUNGSVERFAHREN
ARTICLES PARTIELLEMENT RETROREFLECHISSANTS, ET PROCEDES DE PRODUCTION ASSOCIES

(30) Priority: 17.06.2003 IT MO20030176
(43) Date of publication of application: 15.03.2006
(73) Proprietor: IRC International Reflective Company S.p.A., 41019 Soliera, MO (IT)
(72) Inventor: CORRADI, Paolo, I-42015 Correggio (Prov.of Reggio Emilia (IT)
(74) Representative: Modiano, Micaela Nadia
(86) International application number: PCT/EP2004/006521
(87) International publication number: WO 2004/113970

(56) References cited:
- WO-A-02/103108
- US-A- 2 568 126
- US-A- 4 075 049
- US-B1- 6 376 045
- US-B1- 6 514 586
- PATENT ABSTRACTS OF JAPAN vol. 0111, no. 70 (P-581), 2 June 1987 (1987-06-02) -& JP 62 002206 A (UNITIKA SUPAAKURAITO KK), 8 January 1987 (1987-01-08)
- PATENT ABSTRACTS OF JAPAN vol. 0143, no. 49 (P-1084), 27 July 1990 (1990-07-27) & JP 2 126202 A (UNITIKA SUPAAKURAITO KK), 15 May 1990 (1990-05-15)

## Description

### Technical Field

The present invention relates to partially retroreflective and totally retroreflective articles, particularly of the microsphere-based type. More specifically, the present invention relates to a production method that allows to obtain at the same time partially retroreflective articles having regions with different coloring, reflectance or fluorescence, and preferably metallized monochrome retroreflective articles, of the type provided with preferably exposed microspheres.

### Background Art

One of the problems that affect most severely some categories of workers is the need to allow immediate detection of the presence of a person on a road, especially in low-visibility conditions, for example at night or in case of insufficient lighting. For example, workers assigned to road maintenance or road safety in general, firefighters, medical or rescue personnel, police forces and the like often have to operate in critical conditions and in dangerous locations, for example on the traffic lane of roads and highways and in low-visibility conditions arising from natural causes, for example at night or in case of fog, or from circumstances that are associated with the typical activity of the worker, for example in case of thick smoke for firefighters.

In these situations, it is imperative that the person endangered during the performance of his or her duties be able to reduce the risk of accidents caused by difficulty in being detected immediately by others and accordingly be able to increase his or her own safety level.

The same considerations apply not only to workers performing their duties but also to other categories of individuals, for example cyclists or motorcyclists, who are often difficult to detect in the case of dusk lighting or night lighting, and also apply to passersby in general.

The solution that is currently considered ideal for solving the problems identified above is to apply retroreflective articles, particularly in the form of strips or bands, in strategic positions on the surface of the clothing worn by the various users. Retroreflective articles are able to reflect in an extremely effective manner the rays of light that strike them and are thus highly visible even in low-visibility conditions as soon as they are struck by a beam of light, typically originating from a moving vehicle.

In order to maximize safety, the clothing is often provided not only with a retroreflective band but also with fluorescent colored bands, which increase the visibility of the item of clothing in diffuse lighting conditions, for example in daylight.

For example, EP-0759179 in the name of Minnesota Mining and Manufacturing Company discloses a production method that allows to obtain a retroreflective article provided with a central metallized retroreflective strip and with two lateral fluorescent strips, all three of which are covered by a layer of exposed microspheres. In particular, the patent achieves the aim of providing a retroreflective article that is constituted by a reduced number of layers by applying a layer of microspheres to a supporting structure (carrier), selectively metallizing some of the microspheres and then applying a layer of colored and fluorescent binding adhesive over the entire extension of the article, both on the metallized part and on the non-metallized part.

JP-A-02-126202 discloses a retro-reflecting article comprising a support, a solid resin layer applied on such support and having a first retroreflecting segment and a second segment, the first segment comprising a layer of microspheres partially embedded in a solid resin layer and partially protruding from the plane formed by the binding layer. A reflective layer of metal is arranged between the microspheres and the solid resin layer. The second segment comprises no microspheres and comprises a plane substantially adjacent to the plane formed by the solid resin layer

WO 02/103108 discloses a retroreflective fabric and its method of production.

The resulting product favors simplicity and efficiency to the detriment of its durability and elastic properties, which are necessary for durable and correct application to soft backing materials such as the surfaces of clothing. The presence of glass or ceramic microspheres even on the non-metallized portions of the product in fact reduces the degree of elasticity and softness of the product. At the same time, the presence of colored pigments in the layer that acts as a binding element for the microspheres greatly impairs the efficiency of said binding element, which loses part of its properties, reducing the durability of the product.

In the background art there is therefore a strongly felt need for a retroreflective article that is not only capable of ensuring excellent visibility both in diffuse light conditions and in incident light conditions but at the same time is also highly durable and has characteristics of softness and elasticity that allow it to be applied better to clothing and allow prolonged use without loss of performance.

### Disclosure of the Invention

The aim of the present invention is to overcome the problems identified above by providing a production method and a retroreflective article whose quality, performance and durability exceed those of the

### background art.

Within this aim, an object of the present invention is to provide a production method and a retroreflective article with exposed microspheres in which the binding layer is not contaminated by color pigments that impair its performance.

Another object of the present invention is to provide a production method for obtaining a retroreflective article with bands of different colors that comprise both metallized retroreflective bands and preferably fluorescent colored bands, even in different colors.

Another object of the present invention is to provide a production method for obtaining a retroreflective article with bands of different colors, comprising both metallized retroreflective bands and colored bands, in which the main production waste can be reused fully as independent products, optimizing performance costs.

This aim and these and other objects that will become better apparent hereinafter are achieved by the article of claim 1 and the method of claim 9.

A plurality of spherical domes may advantageously protrude functionally outward, each dome having a volume that is substantially equal to the volume of the second spherical dome of the microspheres.

Conveniently, the spherical domes in the second segment are obtained by solidification or polymerization of adhesive material, the application of which can also reach functionally behind the surface of the layer of metal in the first segment.

Advantageously, a further layer of adhesive material can be applied functionally behind the layer of metal or the layer of primer for metal before the selective removal of portions of the semifinished product, so as to thicken said semi-finished product and make it easier to handle for the continuation of the subsequent steps of the production method and also stronger and thicker in its form as totally reflective article obtained directly as "waste" from the method for producing the partially reflective article.

### Brief Description of the Drawings

Further characteristics and advantages of the present invention will become better apparent from the following detailed description thereof, given as a non-limiting example and accompanied by the associated figures, wherein:
Figure 1 is a schematic sectional view of a semi-finished product during a first step of the production method;
Figure 2 is a schematic sectional view of a semifinished product during a second step of the production method;
Figure 3 is a schematic sectional view of a semifinished product during a third step of the production method;
Figure 4 is a schematic sectional view of a semifinished product during a fourth step of the production method;
Figure 5 is a schematic sectional view of a semifinished product, during a fifth step of the method for producing a partially retroreflective article, and a sectional view of a totally retroreflective article;
Figure 6 is a schematic sectional view of a semifinished product during a sixth step of the production method;
Figure 7 is a schematic sectional view of a partially retroreflective article according to the present invention;
Figure 8 is a schematic sectional view of a semifinished product, during a fifth step of the production method on a reel that comprises more than one partially retroreflective article, and a sectional view of some totally retroreflective articles;
Figure 9 is a schematic sectional view of a semifinished product during a sixth step of the production method on a reel ready for cutting and comprising more than one partially retroreflective article or a partially retroreflective article comprising a plurality of alternated retroreflective and non-retroreflective sections;
Figure 10 is a schematic sectional view of a partially retroreflective article according to the present invention, comprising a plurality of retroreflective and non-retroreflective sections;
Figure 11 is a schematic view, in greater detail, of parts of the microspheres and of the layers applied proximate thereto;
Figure 12 is a flowchart of steps of the production method according to the present invention;
Figure 13 is a schematic sectional view of a semifinished product during a step of the production method according to a second embodiment of the present invention;
Figure 14 is a schematic sectional view of a semifinished product during another step of the production method according to a second embodiment of the present invention;
Figure 15 is a schematic sectional view of a partially retroreflective article according to a second embodiment of the present invention, comprising a plurality of retroreflective and non-retroreflective sections;
Figure 16 is a schematic sectional view of a semifinished product during a step of a variant of the manufacturing method according to the present invention;
Figure 17 is a schematic sectional view of a film used during the variant of the manufacturing method according to the present invention;
Figures 18 to 20 are schematic sectional views of a semifinished product during other steps of the variant of the manufacturing method;
Figure 21 is a schematic sectional view of a partially retroreflective article according to a variant of the first embodiment of the present invention, comprising a plurality of retroreflective and non-retroreflective sections.

### Ways of carrying out the Invention

With reference to the figures, the reference numeral 10 generally designates microspheres made of transparent material, preferably glass or ceramic material. The index of refraction of the microspheres may be any, depending on the application, but is preferably comprised between 1.8 and 2.2 and even more preferably is equal to 1.9.

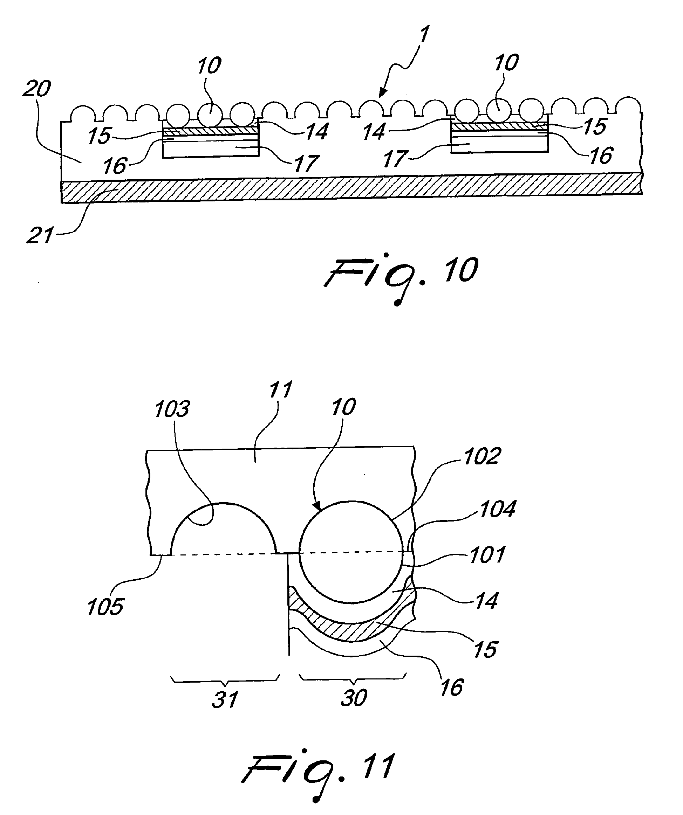

Figure 11 is a view of a detail of the microspheres and of the voids left by the prior presence of microspheres now removed. In particular, Figure 11 illustrates a microsphere 10 in a segment 30, said microsphere being partially immersed in a support or carrier 11 and in a binding layer 14, so as to form two spherical segments, designated here as "first spherical dome" 101 and "second spherical dome" 102, which are divided by the plane 104 defined by the upper surface of the binding layer, where the term "upper" designates the surface in contact with the carrier 11.

The figure also shows a segment 31, in which there is a spherical dome 103 obtained in the carrier 11 by removing a microsphere previously and partially immersed in said carrier, which protrudes with respect to a plane 105 that is substantially adjacent to the plane 104 formed above.

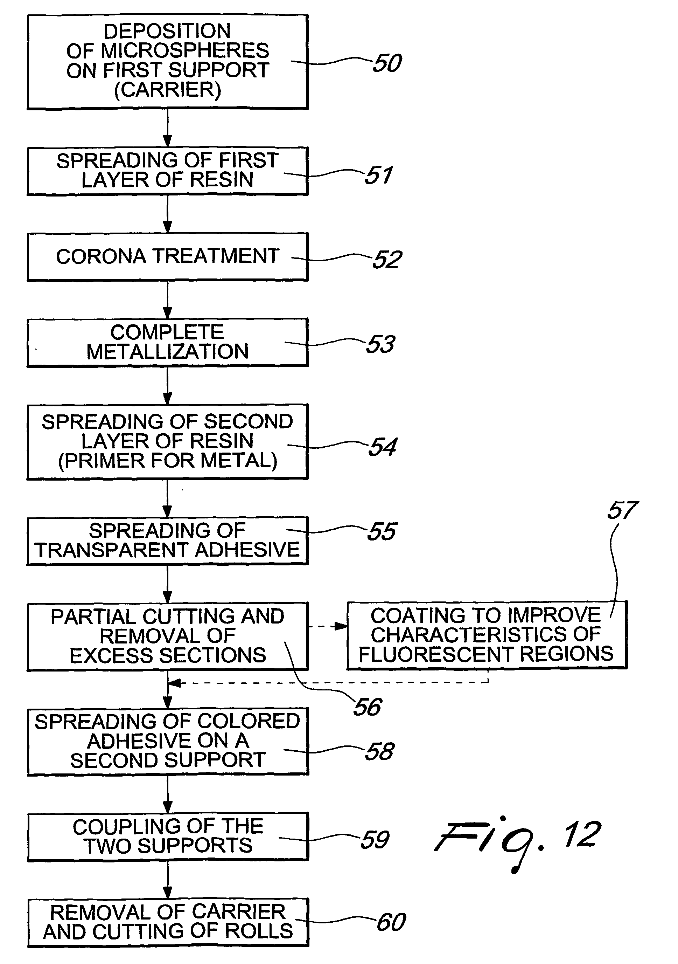

With reference to Figure 12, the production method according to the present invention is as follows.

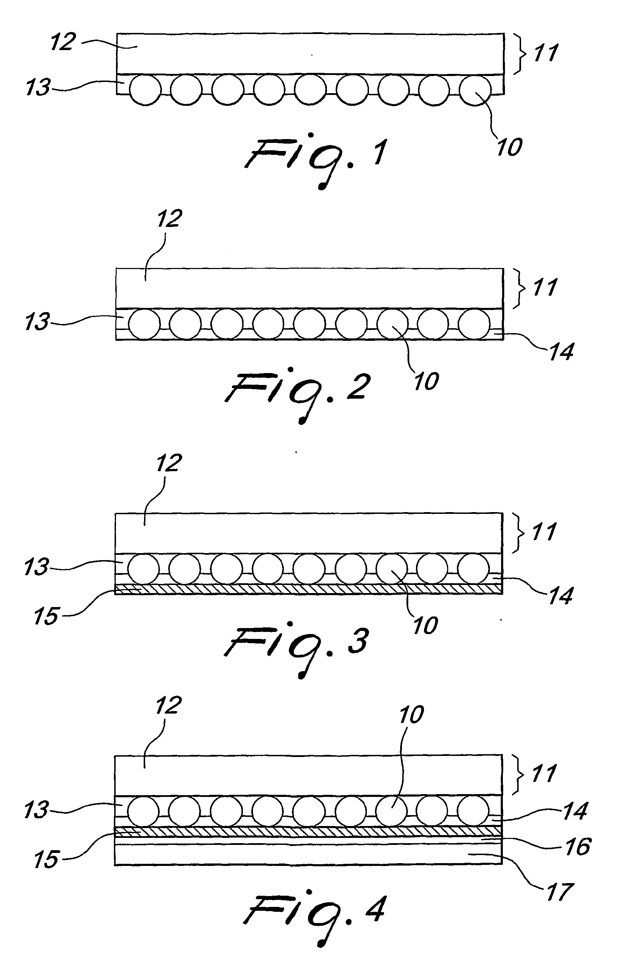

In step 50, a layer of microspheres 10 is deposited on a support (carrier) 11 composed of a first layer 12 of film, paper or the like and a second adhesive layer 13, preferably a thermoadhesive layer, which retains the microspheres in position for subsequent processing. The spheres are embedded only partially in the carrier: approximately 20-80% of the total surface of each sphere therefore remains exposed, as shown in Figure 1 and in greater detail in Figure 11. Merely for reasons of clarity and as exemplifying illustration, the microspheres 10 are always shown, in the figures that accompany this description, immersed to 50% of their volume within the carrier 11. Also by way of non-limiting example, the layer 12 can be a film of polyester with a thickness comprised between 30 and 80 µm, while the adhesive layer 13 can be constituted by a polyethylene film with a thickness between 20 and 60 µm, which is heated to a temperature comprised between 110 and 170 °C in order to allow the partial sinking of the microspheres 10.

In step 51, a first layer 14 with a thickness of a few microns of single- or two-component resin is applied functionally behind the layer of microspheres 10, as shown in Figure 2. The thickness of the layer can be comprised between 0.5 and 10 µm and is preferably approximately 1 µm. The resin thus deposited acts as a binding agent for the microspheres and is preferably transparent or pigmented with transparent colors. In the present description, the expression "functionally behind" is used to indicate that the material is applied to the surface of the semifinished product that remains free in the various steps of the method and lies opposite with respect to the position of the carrier 11, the carrier being arranged on the same side with respect to the position of the observer when he looks at the finished product. A first material arranged, deposited, spread or applied "functionally behind" a second material does not necessarily indicate a direct contact between the materials, but expresses the relative position of the two materials, between which it is possible to interpose other materials or substances for protective requirements or to provide suitable chemical bridges between materials, as is known in the background art. The same considerations apply when it is stated that a material is arranged, deposited, spread or applied on or over another material.

In step 52, the layer of transparent resin 14 is subjected to a corona treatment, so as to increase its surface tension.

In step 53, the entire exposed surface of the layer 14 of corona-treated transparent resin is metallized in high vacuum with aluminum, silver or other suitable material, thus forming the metallic layer 15 shown in Figure 3, preferably not thicker than 1 µm.

In step 54, a second layer of transparent resin 16, typically a primer that is specific for the metal used, for example specific for aluminum, is spread over the entire exposed surface of the metallic layer 15 and acts as a chemical bridge between the metal and the subsequent layers.

In step 55, a layer of adhesive 17, with a thickness preferably comprised between 20 and 300 µm, preferably 40 µm, is applied to the entire free surface 16, and is coupled to siliconized film or non-adhesive paper, not shown in the figures, or directly coupled to a thermoadhesive product, preferably having a thickness comprised between 10 and 200 µm.

Once the polymerization of the adhesive, if any, has been completed, and when it has ceased to have any residual adhesiveness, the protective paper or film is removed. In any case, it is still possible to use silicone paper or film with a coating comprised between 1 and 100 µm of lacquer applied to the siliconized side in order to avoid problems of residual adhesiveness. As an alternative, it is possible to use a thermoadhesive product with a thickness preferably comprised between 10 and 200 µm.

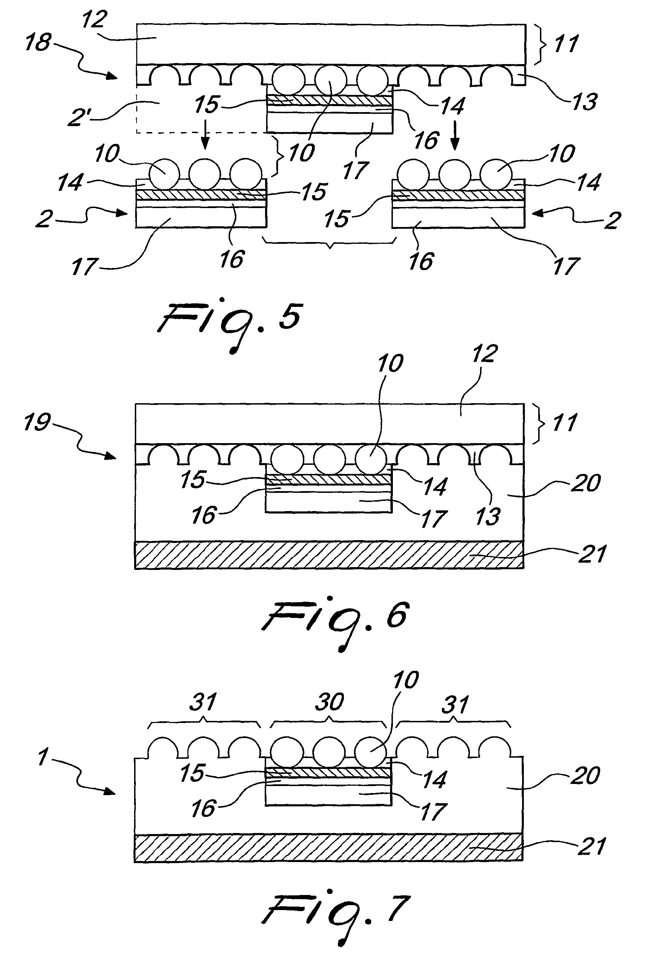

In step 56, the resulting semifinished product is passed through a machine that performs a partial cutting operation, which consists in providing an incision in the semifinished product starting from the exposed layer 17 up to and including the first layer of binding resin 14, but without affecting the carrier 11. The distance between two incisions depends on the width of the non-metallized strips to be obtained, as will become better apparent hereinafter. As shown in Figure 5, the portions of semifinished product produced by the partial cutting operation are then separated from the carrier and produce a first retroreflective finished article 2, which consists of a series of retroreflective metallized strips ready for application to the intended destination surfaces according to conventional methods, with full recovery of production waste.

The processing reel therefore has a semifinished product 18, constituted by a carrier 11 that has a first retroreflective section, in which microspheres 10 are present, which are bonded and metallized as described, and a second neutral section, which instead has no microspheres and has an "empty" portion 2' that is complementary to the removed retroreflective article 2. It should be noted that the microspheres removed as described above, however, leave in the layer 13 of the carrier 11 a hemispherical pattern that corresponds to the volume previously occupied by the portions of microspheres embedded in the adhesive layer 13.

In step 57, a layer of transparent protective lacquer can be applied optionally to the surfaces 13 left exposed following the operations for removing the strips 2 performed in step 56.

In step 58, a layer of single- or two-component adhesive 20, colored at will, preferably fluorescent, yellow or of any other color, is applied to a second support 21, for example a supporting fabric. The thickness of the layer of adhesive 20 can in fact be any, but is preferably comprised between 10 and 400 µm.

In step 59, the semifinished product 18 and the second support 21 on which the adhesive 20 has been applied are coupled for a period of time that is sufficient for the polymerization of the adhesive, if any, thus obtaining the semifinished product 19 shown in Figure 6.

Finally, in step 60 the carrier 11 is removed and the resulting reels are cut into bands having the chosen dimensions, producing the retroreflective article 1 shown in Figure 7. In detail, the article 1 is composed of a first retroreflective segment 30, which comprises a layer of microspheres 10 metallized according to the method described above, and a second segment 31, which instead has no microspheres.

The segment 30 thus ensures a high response in case of incident light and is ideal for rapid identification of people or objects in low-visibility conditions under the action of direct light.

The segment 31, particularly if provided by applying colored and fluorescent adhesive 20, instead ensures excellent visibility in diffuse light conditions.

By way of the production method described above, the article 1 thus obtained, constituted by a retroreflective portion and a fluorescent portion, has considerably better characteristics than similar products of the background art. In particular, the application of a transparent binding layer to the microspheres, which is subsequently metallized, allows to overcome the retention limitations on metallized microspheres reported when colored adhesive is used directly as a binding agent for said microspheres.

Likewise, the removal of the microspheres in the fluorescent portions allows to produce a uniformly pitted surface 22, in which the layer of colored adhesive 20 solidifies, producing a fluorescent surface that is constituted by a regular sequence of hemispherical-type protrusions that further enhance the visibility of the segments 31 in diffuse-light conditions. Likewise, the absence of microspheres in the segments 31 allows to achieve higher flexibility and softness of the product as well as greater durability and washing fastness.

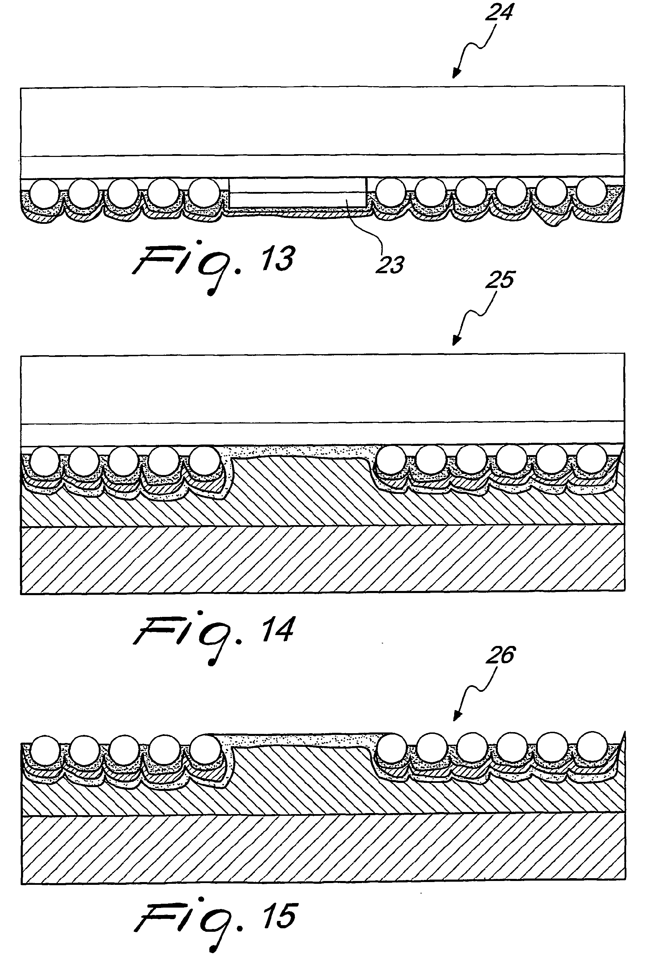

According to a second embodiment of the present invention, shown in Figures 13 to 15, a masking layer 23 is selectively applied on the carrier 11, in segments 31, before the layer of microspheres 10 is applied. This step prevents that, in such segments, the microspheres adhere to the adhesive layer 13 on the carrier 11. The masking layer 23 can be made in plastics, paper or any other suitable material.

Preferably, the masking layer 23 is of the adhesive kind and has a thickness comprised between 12µm and 150µm. According to the size of the areas to mask, the width of the masking layer 23 may vary. Preferably, it is comprised between 5mm and 400mm.

According to the second embodiment of the invention, at step 56 of the production process as previously described the cutting is performed in correspondence to the boundaries of the areas in which the masking layer 23 is located. In this case the cutting of the semifinished product is performed from the exposed layer 17 to the masking layer 23, so that also the masking layer is then removed together with the portions resulting from the cutting step.

So doing, a semifinished product 24 is obtained comprising a carrier 11 having a first retroreflective area with microspheres 10 and a second, neutral area that, differently from the first embodiment, is not provided with protruding domes.

Upon completion of steps 58 and 59 according to the already described manufacturing process, a semifinshed product 25 is obtained, as shown in Figure 14. Such semifinished product 25 features, in the area where the microspheres have not come into contact with the carrier, a flat portion of adhesive 20.

Finally, as already described, the carrier 11 is peeled off at step 60, and the partially retroreflective article 26 shown in figure 15 is so obtained, such article having at least one segment 31 which is not retroreflective, is preferably coloured or fluorescent, and is substantially flat. The absence of spherical protrusions in this segment gives a very high brilliance to the segment 31. Particularly if a coloured and fluorescent adhesive 20 is used, colour and fluorescence effect given by the colour and fluorescent pigments is highly enhanced.

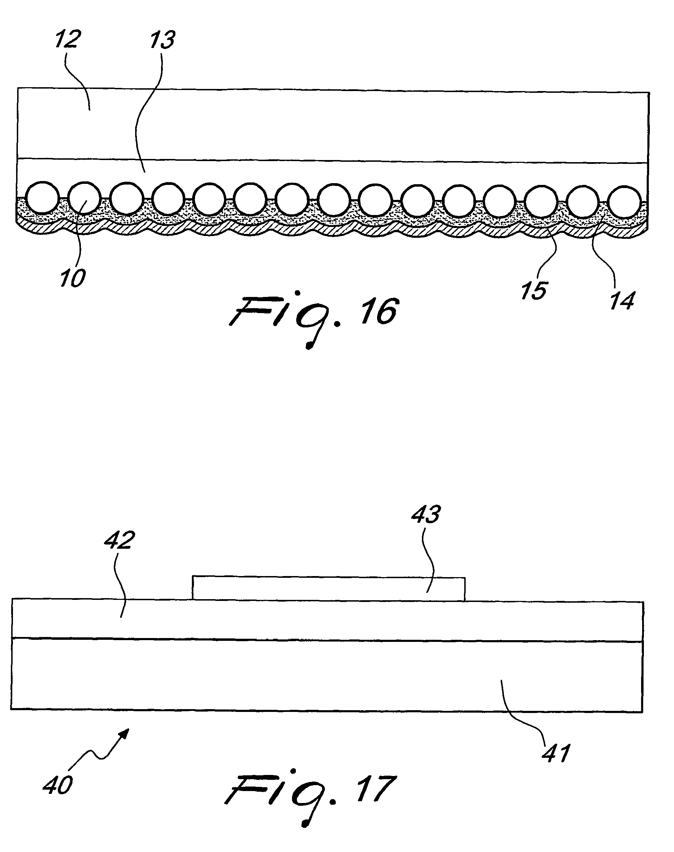

Referring now to Figures 16 to 21, a variant of the manufacturing process of an article according to the present invention is described hereafter.

After the metallizing process has been carried out at step 53, the semifinished product comprises a carrier layer 11, a layer of microspheres 10, a layer of resin 14, preferably a polyurethane resin, and a metal layer 15. A film 40 is then applied to selectively remove sectors of microspheres 10, including the layers 14, 15 in those sectors.

The film 40, as shown in Figure 17, is for instance composed of a plastic layer 41 and of a thermo-adhesive layer 42. The plastic layer 41 can be made of polyester, polypropylene or polycarbonate and, according to a preferred embodiment, has a thickness comprised between 20 and 300 µm.

The thermo-adhesive resin layer 42 is applied on the plastic layer, with the aid of a solvent or as an emulsion, and has a thickness comprised between 20 and 250 µm.

After dessication, a non-thermoplastic resin layer 43, about 5 µm thick, is applied on the thermo-adhesive layer 42.

The semi-finished product as shown in Figure 16 is coupled to the film 40 and heated at a temperature that is preferably comprised between 170 and 200 °C. The film 40 is then removed. So doing, in correspondence to the areas that are not protected by the non-thermoplastic resin layer 43, i.e. where the thermo-adhesive layer 42 is still active, both the microspheres 10 and the resin and metal layers 14, 15 are removed from the carrier 11, leaving transparent areas of semi-finished product.

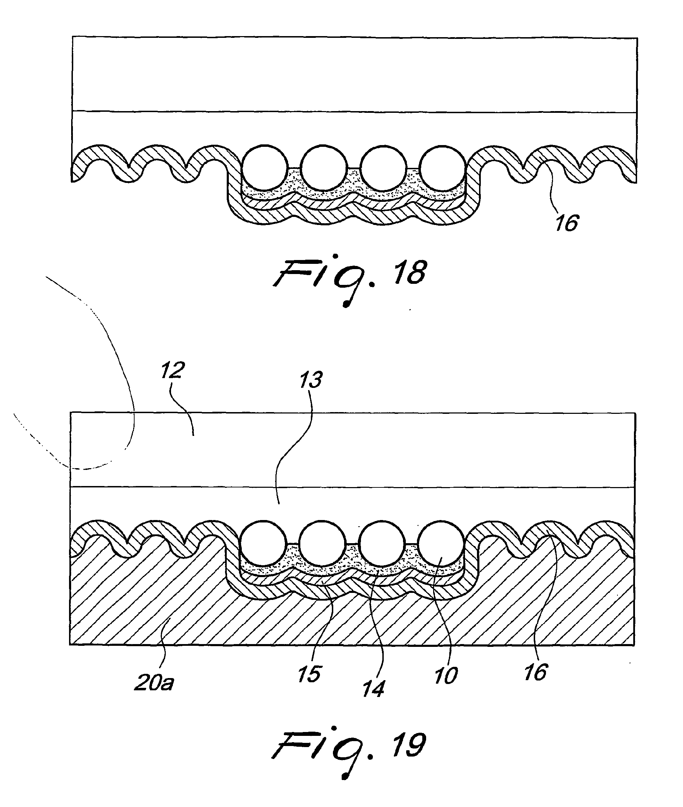

In correspondence to the areas where the non-thermoplastic resin had been applied, the microspheres 10 and the layers 14 and 15 remain in place, as shown in Figure 18.

On the so obtained semi-finished product, a thin resin layer 16 is applied, preferably made of polyurethane, both on the areas where the microspheres are still present and in the areas where the microspheres have been removed.

With reference to Figure 19, an adhesive resin 20a, e.g. made of polyurethane and having a thickness comprised between 20 and 150 µm, is applied on the so obtained semi-finished product. The resin may optionally comprise pigments or colorants so as to give the desired colour to the areas in which the microspheres have been removed.

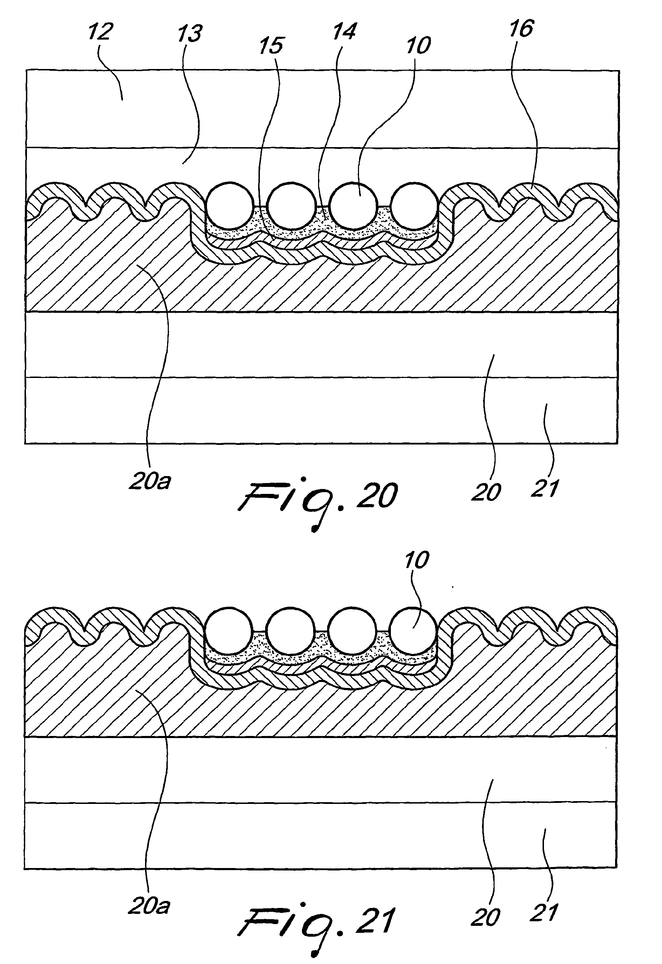

The manufacturing of the semi-finished product shown in Figure 19 continues as previously described at steps 58-60 and as shown in Figures 20 and 21. It is noted that the adhesive layer 20 may be transparent.

Although the description mainly refers to articles having stripy retroreflective areas, it is noted that such areas may be of any shape.

The description of the production method according to the present invention and of the associated retroreflective and partially retroreflective products has been given with reference to the production of a strip of partially retroreflective material constituted by a central retroreflective band, which corresponds to the segment 30 of Figure 7, and of two lateral non-retroreflective bands, which correspond to the segments 31, again of Figure 7.

The person skilled in the art easily comprehends that by adjusting appropriately the distance between two successive cuts it is possible to obtain a partially retroreflective article 1 that has a number of retroreflective bands and of non-reflective bands that can vary at will, at the same time obtaining totally retroreflective articles 2 whose dimensions are equal to those of the portions removed during the production method.

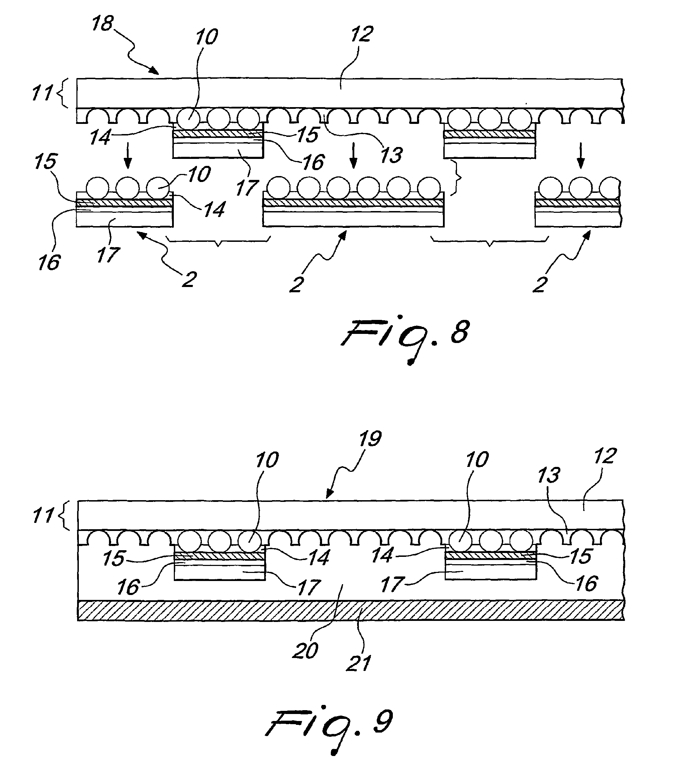

Figure 8, for example, shows a sectional view of a reel of semifinished product 18 being processed, in which portions 2 that constitute totally retroreflective and metallized articles are removed.

With reference to Figure 9, adhesive material 20 is coupled to the reel and fills the empty portions remaining after the partial cutting and removal of the layers below the carrier 11.

By suitably adjusting the distance between the incisions, it is therefore possible to obtain a partially retroreflective article 1 comprising a retroreflective segment 30 and a non-retroreflective segment 31, which is preferably colored and/or fluorescent, or a partially retroreflective article 1 comprising a retroreflective segment 30 and two non-retroreflective segments 31, as shown in Figure 8, or a partially retroreflective article 1 comprising two retroreflective segments 30 and three non-retroreflective segments 31, as shown in Figure 10, and so forth.

It has thus been shown that the described method and system achieve the intended aim and objects; in particular, it has been shown that the system thus conceived allows to overcome all the qualitative limitations of the background art without reducing at all the performance in terms of visibility of the various bands in the different lighting conditions. Moreover, it has been found that the production waste generated by the method according to the invention is fully recoverable in the form of independent retroreflective products that can be used according to the background art.

Clearly, numerous modifications are evident and can be performed promptly by the person skilled in the art.

For example, it is obvious for the person skilled in the art to vary the thicknesses of the various layers that have been described or to replace the described materials with functionally equivalent materials, and it is obvious to add further protective layers as necessary or to renounce one or more layers, for example the adhesive layer 17, although this entails a loss of quality of the product.

Likewise, it is evident to the person skilled in the art that it may be advisable to introduce fire-retardant additives in the materials used to produce the finished product. Said finished product in fact can be intended for particular applications that require, for the safety of the operator, the use of fire-retardant, self-extinguishing or flameproof materials.

## Claims

1. A partially retroreflective article (1) comprising a support (21), and having a first retroreflective segment (30) and a second segment (31),
wherein the first segment (30) comprises a layer of microspheres (10), a binding layer (14) functionally behind the surface of the microspheres (10) and a reflective layer of metal (15) functionally behind the binding layer (14), whereby the surface of each of said microspheres (10) is divided into a first spherical dome (101), which is partially embedded in said binding layer (14), and a second spherical dome (102), which protrudes from the plane (104) formed by said binding layer, the reflective layer of metal (15) being arranged functionally behind the first spherical domes (101); and
wherein the second segment (31) comprises a layer of colored and/or fluorescent adhesive material (20) applied on the support (21), said second segment (31) comprising no microspheres and comprising a plane (105), which is arranged substantially adjacent to the plane (104) formed by the binding layer, the second segment (31) being non-retroreflective, the microspheres (10), the layer of metal (15) the binding layer (14) being arranged only in the first segment,
and wherein the colored and/or fluorescent adhesive material (20) applied on the support (21) lies functionally also behind the surface of the layer of metal (15) in the first segment (30).

2. The article according to claim 1, **characterized in that** the second segment (31) further comprises a plurality of spherical domes (103), which protrude functionally outward from said plane (105), each dome having substantially the same volume as the second spherical dome (102) of the microspheres (10).

3. The article according to claims 1 or 2, **characterized in that** the index of refraction of the microspheres (10) is equal to 1.9.

4. The article according to claims 1 or 2, **characterized in that** the binding layer (14) is transparent.

5. The article according to claims 1 or 2, **characterized in that** the binding layer (14) has a thickness comprised between 0.5 and 1 µm.

6. The article according to claims 1 or 2, **characterized in that** a layer (16) of primer for metal is applied functionally behind the layer of metal (15).

7. The article according to claim 6, **characterized in that** an additional layer of adhesive material (17) is applied functionally behind the layer (15) of primer for metal.

8. A method for manufacturing an article comprising a first retroreflective segment (30) and a second segment (31), comprising the steps of:
a) embedding a layer of microspheres (10) on a first support (11), so as to divide the surface of each of the microspheres (10) into a first dome (101) and a second dome (102);
b) depositing a layer (14) of binding material onto the first support (11), functionally behind the surface of the microspheres (10);
c) depositing a reflective layer of metal (15) functionally behind the first layer of binding material (14);
d) depositing a second layer of binding material or a layer of primer for metal (16) functionally behind the layer of metal (15);
e) selectively removing from the first support (11) the layer of microspheres (10), the layer of binding material (14), the layer of metal (15) and the second layer of binding material (16) at the second segment (31), without cutting the first support (11), so as to form a semifinished product (18) having an empty portion (2');
f) applying a layer of colored and/or fluorescent adhesive material (20) to a second support (21);
g) coupling the semifinished product (18) and the second support (21) on which the adhesive 20 has been applied for a period of time that is sufficient for the polymerization of the adhesive, thereby filling said empty portion (2') with said colored and/or fluorescent adhesive material (20), such that the colored and/or fluorescent adhesive material (20) applied on the support (21) lies functionally also behind the surface of the layer of metal (15) in the first segment (30);
h) removing the first support (11).

9. The method according to claim 8, further comprising, after the step (d), the deposition of a further layer of adhesive (17) functionally behind said second binding layer or primer for metal (16) to be removed selectively in step (e) together with the layer of microspheres (10), the layer of binding material (14), the layer of metal (15), and the second layer of binding material or primer for metal (16).

10. The method according to claims 8 or 9, further comprising, before step (a) is performed, the step of selectively applying on said support (11) a masking layer (23) in correspondence to the second segment (31), to be removed at step (e) together with the layer of microspheres (10), the first binding layer (14), the metal layer (15) and the second binding layer or layer of primer for metal (16).

11. The method according to claim 8, **characterized in that** the index of refraction of the microspheres (10) is equal to 1.9.

12. The method according to claim 8, **characterized in that** the layer of binding material (14) is transparent.

13. The method according to claim 8, **characterized in that** the second layer of binding material (16) is transparent.

14. The method according to claim 9, **characterized in that** the additional layer of adhesive material (17) is transparent.

## Patentansprüche

1. Ein teilweise retroreflektiver Artikel (1), der einen Träger (21) umfasst und ein erstes retroreflektives Segment (30) und ein zweites Segment (31) hat,
wobei das erste Segment (30) Folgendes umfasst: eine Schicht von Mikrokügelchen (10), eine Bindungsschicht (14), funktionell hinter der Oberfläche der Mikrokügelchen (10), und eine reflektierende Metallschicht (15), funktionell hinter, der Bindungsschicht (14), wodurch die Oberfläche jedes der Mikrokügelchen (10) unterteilt wird in eine erste kugelförmige Kuppel (101), die teilweise in die Bindungsschicht (14) eingebettet ist, und eine zweite kugelförmige Kuppel (102), die aus der von der Bindungsschicht gebildeten Ebene (104) herausragt, wobei die reflektierende Metallschicht (15) funktionell hinter den ersten kugelförmigen Kuppeln (101) angeordnet ist, und
wobei das zweite Segment (31) eine Schicht aus farbigem und/oder fluoreszentem Klebematerial (20) umfasst, das auf den Träger (21) aufgetragen wird, wobei das zweite Segment (31) keine Mikrokügelchen umfasst und eine Ebene (105) umfasst, die im Wesentlichen angrenzend an die Ebene (104) angeordnet ist, welche von der Bindungsschicht gebildet wird, wobei das zweite Segment (31) nicht retroreflektiv ist, wobei die Mikrokügelchen (10), die Metallschicht (15) die Bindungsschicht (14) nur in dem ersten Segment angeordnet sind,
und wobei das farbige und/oder fluoreszente Klebematerial (20), das auf den Träger (21) aufgetragen wird, funktionell auch hinter der Oberfläche der Metallschicht (15) in dem ersten Segment (30) liegt.

2. Der Artikel gemäß Anspruch 1, **dadurch gekennzeichnet, dass** das zweite Segment (31) weiter eine Vielzahl kugelförmiger Kuppeln (103) umfasst, die funktionell nach außen aus der Ebene (105) herausragen, wobei jede Kuppel im Wesentlichen dasselbe Volumen hat wie die zweite kugelförmige Kuppel (102) der Mikrokügelchen (10).

3. Der Artikel gemäß Anspruch 1 oder 2, **dadurch gekennzeichnet, dass** der Brechungsindex der Mikrokügelchen (10) gleich 1,9 ist.

4. Der Artikel gemäß Anspruch 1 oder 2, **dadurch gekennzeichnet, dass** die Bindungsschicht (14) transparent ist.

5. Der Artikel gemäß Anspruch 1 oder 2, **dadurch gekennzeichnet, dass** die Bindungsschicht (14) eine Dicke zwischen 0,5 und 1 µm hat.

6. Der Artikel gemäß Anspruch 1 oder 2, **dadurch gekennzeichnet, dass** eine Schicht (16) eines Primers für Metall funktionell hinter der Metallschicht (15) aufgetragen ist.

7. Der Artikel gemäß Anspruch 6, **dadurch gekennzeichnet, dass** eine zusätzliche Schicht Klebematerial (17) funktionell hinter der Schicht (15) Primer für Metall aufgetragen wird.

8. Ein Verfahren zur Herstellung eines Artikels, der ein erstes retroreflektives Segment (30) und ein zweites Segment (31) umfasst, folgende Schritte umfassend:
a) Einbetten einer Schicht von Mikrokügelchen (10) in einen ersten Träger (11), um die Oberfläche jedes der Mikrokügelchen (10) in eine erste Kuppel (101) und eine zweite Kuppel (102) zu unterteilen,
b) Auftragen einer Schicht (14) von Bindungsmaterial auf den ersten Träger (11), funktionell hinter der Oberfläche der Mikrokügelchen (10),
c) Auftragen einer reflektierenden Metallschicht (15) funktionell hinter der ersten Schicht von Bindungsmaterial (14),
d) Auftragen einer zweiten Schicht von Bindungsmaterial oder einer Schicht eines Primers für Metall (16) funktionell hinter der Metallschicht (15),
e) selektives Entfernen der Schicht von Mikrokügelchen (10), der Schicht von Bindungsmaterial (14), der Metallschicht (15) und der zweiten Schicht von Bindungsmaterial (16) am zweiten Segment (31) von dem ersten Träger (11), ohne den ersten Träger (11) zu schneiden, um ein Halbzeug (18) zu bilden, das einen leeren Abschnitt (2') hat,
f) Auftragen einer Schicht aus farbigem und/oder fluoreszentem Klebstoffmaterials (20) auf einen zweiten Träger (21),
g) Kopplung des Halbzeugs (18) und des zweiten Trägers (21), auf welchen der Klebstoff (20) aufgetragen wurde, über einen Zeitraum, der zur Polymerisation des Klebstoffs ausreicht, wodurch der leere Abschnitt (2') mit dem farbigen und/oder fluoreszenten Klebstoffmaterial (20) gefüllt wird, so dass das farbige und/oder fluoreszente Klebstoffmaterial (20), das auf den Träger (21) aufgetragen wird, funktionell ebenfalls hinter der Oberfläche der Metallschicht (15) in dem ersten Segment (30) liegt,
h) Entfernen des ersten Trägers (11).

9. Das Verfahren gemäß Anspruch 8, das weiter, nach Schritt (d), das Auftragen einer weiteren Schicht aus Klebstoff (17) funktionell hinter der zweiten Bindungsschicht oder dem Primer für Metall (16) umfasst, die in Schritt (e) gemeinsam mit der Schicht von Mikrokügelchen (10), der Schicht von Bindungsmaterial (14), der Metallschicht (15) und der zweiten Schicht Bindungsmaterial oder dem Primer für Metall (16) selektiv zu entfernen ist.

10. Das Verfahren gemäß Anspruch 8 oder 9, das weiter, bevor Schritt (a) durchgeführt wird, Folgendes umfasst: den Schritt des selektiven Auftragens einer Abdeckschicht (23) auf den Träger (11) in Übereinstimmung mit dem zweiten Segment (31), die in Schritt (e) gemeinsam mit der Schicht von Mikrokügelchen (10), der ersten Bindungsschicht (14), der Metallschicht (15) und der zweiten Bindungsschicht oder Schicht von Primer für Metall (16) zu entfernen ist.

11. Das Verfahren gemäß Anspruch 8, **dadurch gekennzeichnet, dass** der Brechungsindex der Mikrokügelchen (10) gleich 1.9 ist.

12. Das Verfahren gemäß Anspruch 8, **dadurch gekennzeichnet, dass** die Schicht von Bindungsmaterial (14) transparent ist.

13. Das Verfahren gemäß Anspruch 8, **dadurch gekennzeichnet, dass** die zweite Schicht von Bindungsmaterial (16) transparent ist.

14. Das Verfahren gemäß Anspruch 9, **dadurch gekennzeichnet, dass** die zusätzliche Schicht aus Klebstoffmaterial (17) transparent ist.

## Revendications

1. Article partiellement rétro-réfléchissant (1), comprenant un support (21) et ayant un premier segment rétro-réfléchissant (30) et un second segment (31),
dans lequel le premier segment (30) comprend une couche de microsphères (10), une couche de liaison (14) de manière fonctionnelle derrière la surface de microsphères (10) et une couche de métal réfléchissante (15) de manière fonctionnelle derrière la couche de liaison (14), la surface de chacune desdites microsphères (10) étant divisée en un premier dôme sphérique (101) qui est partiellement noyé dans ladite couche de liaison (14), et un deuxième dôme sphérique (102) qui fait saillie à partir du plan (104) formé par ladite couche de liaison, la couche de métal réfléchissante (15) étant disposée de façon fonctionnelle derrière les premiers dômes sphériques (101); et
dans lequel le second segment (31) comprend une couche de matière adhésive colorée et/ou fluorescente (20) appliquée sur le support (21), ledit second segment (31) ne comprenant pas de microsphères et comprenant un plan (105) qui est disposé sensiblement adjacent du plan (104) formé par la couche de liaison, le second segment (31) étant non réfléchissant, les microsphères (10), la couche de métal (15), la couche de liaison (14) n'étant disposées que dans le premier segment,
et dans lequel la matière adhésive colorée et/ou fluorescente (20) appliquée sur le support (21) est également placée de manière fonctionnelle derrière la surface de la couche de métal (15) dans le premier segment (30).

2. Article selon la revendication 1, **caractérisé en ce que** le second segment (31) comprend de plus une pluralité de dômes sphériques (103), qui font saillie de façon fonctionnelle à l'extérieur dudit plan (105), chaque dôme ayant sensiblement le même volume que le second dôme sphérique (102) des microsphères (10).

3. Article selon les revendications 1 ou 2, **caractérisé en ce que** l'indice de réfraction des microsphères (10) est égal à 1,9.

4. Article selon les revendications 1 ou 2, **caractérisé en ce que** la couche de liaison (14) est transparente.

5. Article selon les revendications 1 ou 2, **caractérisé en ce que** la couche de liaison (14) a une épaisseur comprise entre 0,5 et 1 µm.

6. Article selon les revendications 1 ou 2, **caractérisé en ce qu'**une couche (16) de primaire pour un métal est appliquée de façon fonctionnelle derrière la couche de métal (15).

7. Article selon la revendication 6, **caractérisé en ce qu'**une couche additionnelle de matière adhésive (17) est appliquée de façon fonctionnelle derrière la couche (15) de primaire pour un métal.

8. Procédé pour fabriquer un article comprenant un premier segment rétro-réfléchissant (30) et un second segment (31), comprenant les étapes consistant à :
a) noyer une couche de microsphères (10) sur un premier support (11), de façon à diviser la surface des microsphères (10) en un premier dôme (101) et en un second dôme (102) ;
b) déposer une couche (14) de matériau de liaison sur le premier support (11), de façon fonctionnelle derrière la surface des microsphères (10) ;
c) déposer une couche de métal réfléchissante (15) de façon fonctionnelle derrière la première couche de matériau de liaison (14) ;
d) déposer une seconde couche de matériau de liaison ou une couche de primaire pour un métal (16) de façon fonctionnelle derrière la couche de métal (15) ;
e) retirer de façon sélective du premier support (11) la couche de microsphères (10), la couche de matériau de liaison (14), la couche de métal (15) et la seconde couche de matériau de liaison (16) sur le second segment (31), sans couper le premier support (11), de façon à former un produit semi-fini (18) ayant une partie vide (2') ;
f) appliquer une couche de matière adhésive colorée et/ou fluorescente (20) sur un second support (21) ;
g) coupler le produit semi-fini (18) et le second support (21) sur lequel l'adhésif (20) a été appliqué pendant une période de temps qui est suffisante pour la polymérisation de l'adhésif, remplissant ainsi ladite partie vide (2') avec ladite matière adhésive colorée et/ou fluorescente (20), de sorte que la matière adhésive colorée et/ou fluorescente (20) appliquée sur le support (21) est placée également de manière fonctionnelle derrière la surface de la couche de métal (15) dans le premier segment (30) ;
h) retirer le premier support (11).

9. Procédé selon la revendication 8, comprenant de plus, après l'étape (d), l'étape consistant à déposer une couche additionnelle d'adhésif (17) de façon fonctionnelle derrière ladite seconde couche de liaison ou le primaire pour un métal (16) à retirer de façon sélective lors de l'étape (e) conjointement avec la couche de microsphères (10), la couche de matériau de liaison (14), la couche de métal (15) et la seconde couche de matériau de liaison ou le primaire pour un métal (16).

10. Procédé selon les revendications 8, ou 9, comprenant de plus, avant que l'étape (a) ne soit effectuée, l'étape consistant à appliquer sélectivement sur ledit support (11), une couche de masquage (23) en correspondance avec le second segment (31), à retirer lors de l'étape (e) conjointement avec la couche de microsphères (10), le premier matériau de liaison (14), la couche de métal (15) et la seconde couche de matériau de liaison ou la couche de primaire pour un métal (16).

11. Procédé selon la revendication 8, **caractérisé en ce que** l'indice de réfraction des microsphères (10) est égal à 1,9.

12. Procédé selon la revendication 8, **caractérisé en ce que** la couche de matériau de liaison (14) est transparente.

13. Procédé selon la revendication 8, **caractérisé en ce que** la seconde couche de matériau de liaison (16) est transparente.

14. Procédé selon la revendication 9, **caractérisé en ce que** la couche additionnelle de matière adhésive (17) est transparente.
